Europäisches Patentamt

European Patent Office

Office européen des brevets

(11) Publication number: **0 190 263**
**B1**

(12) EUROPEAN PATENT SPECIFICATION

(45) Date of publication of patent specification: **06.02.91**

(21) Application number: **85903942.2**

(22) Date of filing: **25.07.85**

(86) International application number:
**PCT/US85/01431**

(87) International publication number:
**WO 86/00972 13.02.86 Gazette 86/04**

(51) Int. Cl.⁵: **F 16 L 39/04**

(54) HIGH PRESSURE PRODUCT SWIVEL.

(30) Priority: **30.07.84 US 635922**
**17.12.84 US 683669**

(43) Date of publication of application:
**13.08.86 Bulletin 86/33**

(45) Publication of the grant of the patent:
**06.02.91 Bulletin 91/06**

(84) Designated Contracting States:
**AT BE CH DE FR GB IT LI LU NL SE**

(56) References cited:
**FR-A-2 422 097**
**US-A-4 405 162**

(73) Proprietor: **VICKERS PLC**
**Vickers House Millbank Tower Millbank**
**London SW1P 4RA (GB)**

(72) Inventor: **PEDERSEN, Kristen, I.**
**1423 Heathwood**
**Houston, TX 77077 (US)**
Inventor: **ETHERIDGE, Charles, O.**
**3730 Cypress Hill Drive**
**Spring, TX 77388 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates in general to equipment for transferring fluids. In particular, the invention relates to a product swivel and a swivel assembly adapted for transferring fluids between tankers, storage vessels and the like and one or more conduits beneath the ocean surface.

The offshore search for oil and gas has greatly expanded in recent years and progressed into deep rough water such as the North Sea. To facilitate production of oil and gas from remotely located offshore fields, complex mooring systems for floating vessels which serve as centralized production sites for the entire field have been developed. Flexible fluid lines extend from a subsea location to the mooring site to permit the transfer of fluids between a moored vessel and a subsea location. For example, certain fluid lines may be used to convey oil and gas into the floating vessel while other fluid lines may be used to inject liquids or gases back into the field for purpose of field stimulation or storage.

Floating vessels can be moored to a single point mooring system, which permits the vessel to weather vane and rotate 360 degrees about a single mooring point. To permit the vessel to rotate and move freely without causing twisting or entanglement of the various fluid lines to which the vessel is attached, it is necessary to provide a swivel mechanism to connect the fluid lines to the mooring site. Furthermore, since a plurality of fluid lines are involved, it is necessary that such a swivel have the capability of accommodating multiple lines.

Multiple line swivels for offshore use are known in the prior art. For example, U.S. Patent No. 4,306,741 issued to Foolen describes a swivel assembly where a plurality of swivels are mounted coaxially and have an axial radial bearing structure with axial rollers and radial rollers bearingly supporting the inner and outer rings of each swivel as well as supporting one swivel with respect to each other on top of another. The seals of the Foolen patent are radial seals which seal against the outer wall of the inner ring. The seals are diposed in radial grooves in the inner wall of the outer ring making it practically impossible to assemble the swivel unit with seals of adequate rigidity to withstand the required pressure without being extruded into the seal gap between the inner and outer swivel rings. Seal material of adequate rigidity cannot be stretched enough for the seal ring and be inserted in a radial groove in the inner ring or compressed enough for insertion into radial grooves in the outer ring.

U.S. Patent No. 3,598,433 to Dobler et al illustrates a fluid swivel in which an outer ring is supported by means of ball bearings with respect to a cylindrical band secured to a drum like structure.

Other U.S. patents illustrating rotatable swivels include:

U.S. Patent 2,293,585  Bard
U.S. Patent 3,237,220  Bengt-Ake Brandt
U.S. Patent 3,462,176  Goodrum
U.S. Patent 3,466,061  Fonda-Bonardi
U.S. Patent 3,966,249  Lindquist
U.S. Patent 4,065,159  Leroy
U.S. Patent 3,111,467  de Fremery
U.S. Patent 4,126,336  Ortloff et al

U.S. Patents showing swivel assemblies for carrying oil or other cargoes between a ship and subsea installations include:

U.S. Patent 3,074,082  Griebe
U.S. Patent 3,366,982  Sutton
U.S. Patent 4,142,767  Karl
U.S. Patent 4,254,523  Kentosh

Dutch patent application 73,10795 illustrates a stacked swivel.

The radial seals of the prior art do not operate efficiently under high pressure because high pressure product in the conduit between the outer ring and the inner ring tends to separate the rings. In other words, the inner ring deflects inwardly and the outer ring deflects outwardly, thereby forcing the radial seals out of sealing engagement of one ring from the other ring. The radial seals of the Foolen patent, as referenced above, are in axial alignment above and below the conduit chamber thereby resulting in balanced axial loading between the inner and outer rings.

The prior art bearing assemblies, though designed to transfer large radial and thrust loads, lose their concentricity as the inner and outer rings deflect away from each other upon pressurization of the conduit chamber, as discussed above, thereby creating looseness in the bearing assembly. Also, as the bearing assembly wears, additional looseness results in the bearing assembly.

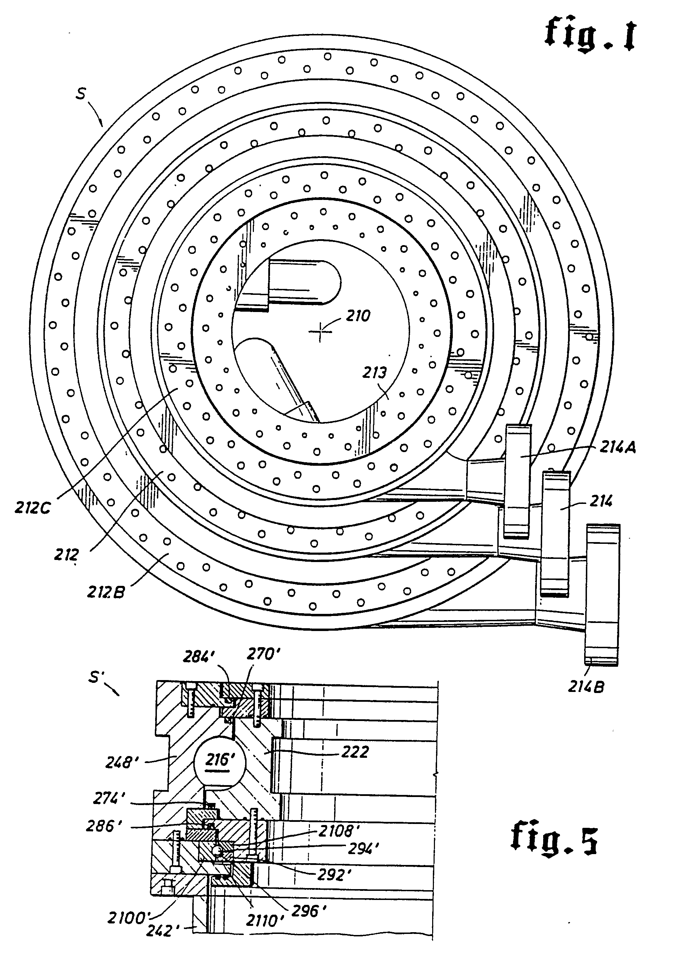

Document FR—A—2,422,097 shows in the top half of figure 1 the construction of a product swivel conforming to the pre-characterising part of claim 1 below. In common with other prior art arrangements, when the conduit chamber of this arrangement is subjected to extremely high pressures it tends to become loose, the seals tending to open with increasing pressure.

This problem is overcome in the invention by an arrangement as set forth below in which the pressurization of a conduit chamber in cooperation with the placing of the sealing surfaces and seals create an axial loading which tends to force the sealing surfaces together rather than causing separation.

According to the invention there is provided a swivel adapted for rotating about a substantially vertical axis; including a swivel body having an inner ring having a substantially outwardly facing surface; an outer ring having a substantially inwardly facing surface; said surfaces when said inner ring is in registration with said outer ring forming a toroidally shaped conduit chamber; one ring being rotatably supported with respect to the other ring; the inner ring has on one side of the conduit chamber an annular portion radially overlapping a first portion of the outer ring to form a sealing surface axially facing the conduit chamber, there being provided a corresponding sealing surface on the first portion of the outer ring; the inner ring has on the other side of the conduit chamber an annular portion radially overlapping a second portion of the outer ring to form a sealing surface axially facing away from the conduit chamber, there being provided a corresponding sealing surface on the second portion of the outer ring; a primary seal being disposed between each sealing surface of the inner ring and its respective corresponding sealing surface; characterized in that the seal between the sealing surface of the inner ring facing away from the conduit chamber and its corresponding sealing surface of the outer ring is at a greater distance from the vertical axis of the swivel than the seal between the inner ring sealing surface facing towards the conduit chamber and its corresponding surface of the outer ring, pressurization of the conduit chamber, thereby causing an axial force between the inner ring and the outer ring in a direction urging each sealing surface towards its corresponding sealing surface aiding the sealing of the conduit chamber, and each primary seal is situated in an annular groove in one of the surfaces. Optional features of the invention are set out in the dependent claims.

The objects, advantages and features of the invention will become more apparent by reference to the drawings which are appended hereto and wherein like numerals indicate like parts and wherein illustrative embodiments of the invention are shown.

Figure 1 illustrates in a plan view a swivel assembly in which three swivels are stacked coaxially together for connecting three conduits from beneath and interior to the swivel assembly to three conduits exterior to the assembly;

Figure 2 shows a side view of the swivel assembly of Figure 1 partially in cross-section;

Figure 3 illustrates a cross-section through a swivel of the invention and further illustrates the preferred embodiment of the invention where the inner rings are stationary and the outer rings are independently rotatable;

Figure 4, which shows a section through lines 4—4 of Figure 3, illustrates a raceway chamber of a bearing assembly being loaded with bearing balls and spacers; and

Figure 5 illustrates an alternative embodiment of the invention where the outer rings are stationary and the inner rings are individually rotatable with respect thereto.

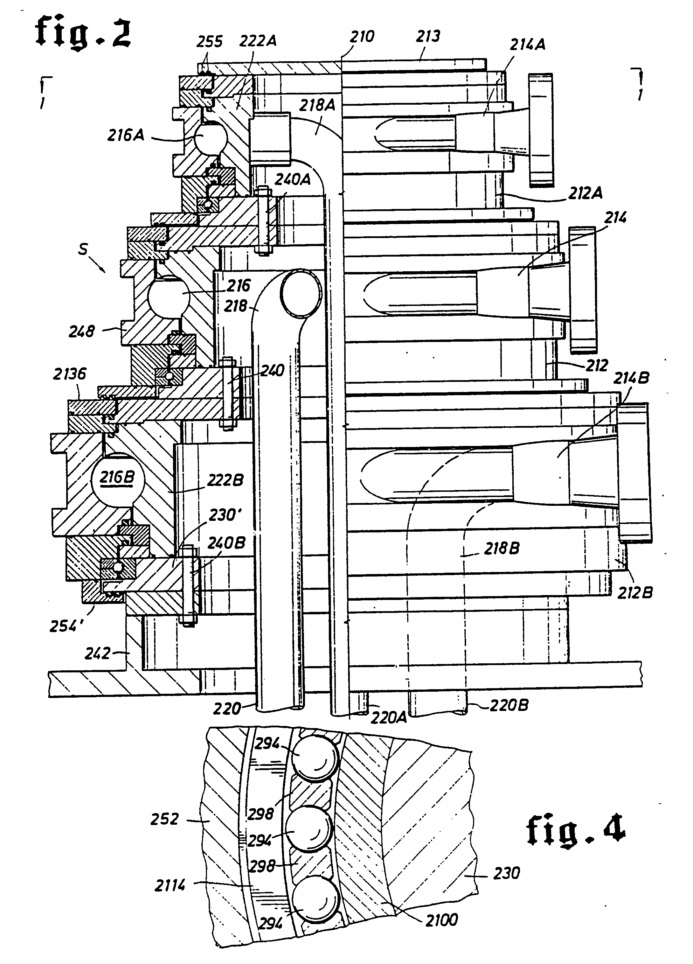

The swivel assembly S is oriented for rotating about a vertical axis 210 as shown in Figures 1 and 2. The swivel assembly S comprises two or more coaxially stacked swivels which are essentially identical to one another in structure but are of different sizes.

Figure 1 shows in a plan view of coaxially stacked swivels 212, 212A and 212B and respective external connectors 214, 214A and 214B which may be connected to external conduits for connecting to conduit chambers 216, 216A and ·216B, respectively, of the stacked swivels, as shown in Figure 2.

As shown in Figure 2, internal conduit connectors 218, 218A and 218B connected to vertically disposed conduits 220, 220A and 220B, respectively, and conduit chambers 216, 216A and 216B, respectively. Although three swivels are illustrated in the preferred embodiment of the assembly, more or less swivels may of course be stacked in alternative embodiments.

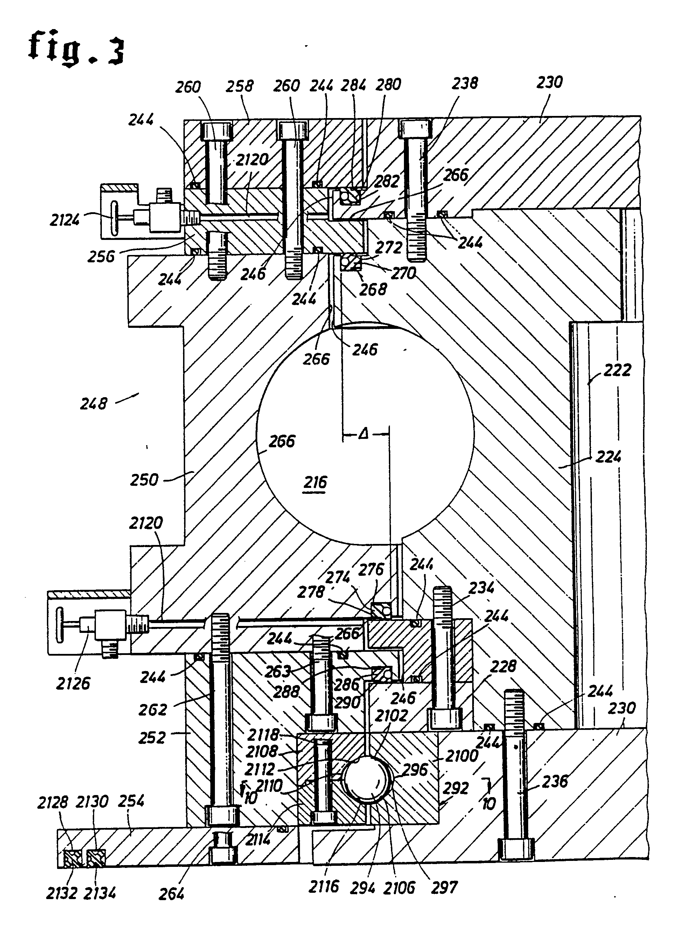

As shown in Figure 3, an inner ring 222 includes an annular primary inner ring 224, a first annular lower sealing portion 226, a second annular lower sealing portion 228, a bottom flange portion 230 and a first upper sealing portion 232. The first lower sealing portion 226 and the second lower sealing portion 228 are secured below the primary inner ring 224 by one or more bolts 234 threadedly received into threaded bores in the primary inner ring 224. The bottom flange portion 230 overlapping portion 228, is secured below the primary inner ring 224 by means of one or more bolts 236 threadedly received into a threaded bore in the primary inner ring 224. The first upper sealing portion 232 is secured above the primary inner ring 224 by means of one or more bolts 238 threadedly received into a threaded bore of the primary inner ring 224.

As shown in Figures 2 and 3, the first upper sealing portion 232B of the inner ring 222B is secured to the bottom flange portion 230 of inner ring 222 by one or more bolts 240. As shown in Figure 2, inner ring 222A is bolted to inner ring 222 by bolts 240A similar to the connection as described between inner ring 222 and inner ring 222B. Inner ring 222B is bolted to stationary base 242, as shown in Figure 2, by bolts 240B securing the inner rings 222, 222A and 222B together in a stationary fashion.

Turning once again to Figure 3, static high pressure O-rings 244 are provided in annular grooves of the inner ring 222 in order to provide sealing between surfaces opposing the inner ring 222. In the same fashion, static high pressure O-rings are provided in an inner ring 222A and inner ring 222B.

The inner ring 222 has a substantially outwardly facing surface 246 comprising the surfaces of the primary inner ring 224, the first upper sealing portion 232, the first lower sealing portion 226 and the second lower sealing portion 228.

The swivel body further includes an outer ring 248 comprising an annular primary outer ring 250, an annular lower sealing portion 252, an annular bottom flange portion 254, an annular first upper sealing portion 256 and an annular second upper sealing portion 258. In the preferred embodiment, the first upper sealing portion 256 and the second upper sealing portion 258 are secured above the primary outer ring 250 by means of one of more bolts 260 threadedly received into one or more threaded bores of the primary outer ring 250. The lower sealing portion 252 is secured below the primary outer ring 250 by means of one or more bolts 262 threadedly received into a threaded bore of primary outer ring 250. The bottom flange portion 254 is secured below the lower sealing portion 252 by means of one or more bolts 264 threadedly received into a threaded bore in the portion 252.

Static high pressure O-rings 244 are disposed in annular grooves in the outer ring 248 for providing sealing between opposing surfaces in the outer ring 248 similarly to the sealing of the O-rings 244 in the inner ring 222.

The outer ring 248 has a substantially inwardly facing surface 266 comprising the surface of the primary outer ring 250, the first upper sealing portion 256, the second upper sealing portion 258 and the lower sealing portion 252.

When the outer ring 248 is assembled concentrically about the inner ring 222, the inwardly facing concave conduit surface 266 of the primary outer ring 250 comes into registration with the outwardly facing concave conduit surface 246 of the primary inner ring 224 defining a toroidally shaped conduit chamber 216 and forms a gap above and below the conduit chamber 216. The gap is defined by the substantially outwardly facing surface 246 of the inner ring 222 and the substantially inwardly facing surface 266 of the outer ring 248.

Disposed above the conduit chamber 216 in a first annular groove 268 of the primary inner ring 224, a primary upper face seal 270 is disposed for sealingly engaging a downwardly facing sealing surface 272 of the first upper sealing portion 256 of the outer ring 248.

A primary lower face seal 274 is disposed below the conduit chamber 216 in a second annular groove 276 in the primary outer ring 250 for sealingly engaging an upwardly facing sealing surface 278 of the first lower sealing portion 226 of the inner ring 222. The primary upper seal 270 is offset a greater radial distance $\Delta$ from the vertical axis 210, as shown in Figure 2, than the primary lower seal 274. Pressurization of the conduit chamber 216 in cooperation with the offset of the primary seals 270 and 274 creates axial loading of the swivel S to urge the rotatable outer ring 248 downwardly with respect to the stationary inner ring 222. Such downward urging of the outer ring 248 tends to decrease the vertical distance between the sealing surface 272 and the annular groove 268 for seal 270 and the vertical distance between sealing surface 278 and annular groove 276 for seal 274 operably aiding the sealing of the conduit chamber 216.

The offset of primary seals 270 and 276 provides a resultant force of such magnitude to create a uni-directional force on the swivel S operably aiding continuously in the sealing of the conduit chamber 216. In other words, the uni-directional downward force on the outer ring 250 with respect to inner ring 224 of the preferred embodiment is of a magnitude such that when upward external forces act on the swivel, the resultant force is uni-directionally downwardly.

The swivel S further comprises a secondary upper face seal 280 disposed above the conduit chamber 216 in vertical alignment with the primary upper face seal 270 in a third annular groove 282 of upper sealing portion 232 of the inner ring 222 for sealingly engaging a sealing surface 284 on the second upper sealing portion 258 of the rotatable outer ring 248. The secondary upper seal 280 is in communication with the primary upper seal 270 by the gap defined by the substantially outwardly facing surface 246 of the inner ring 222 and the substantially inwardly facing surface 266 of the outer ring 248.

Also a secondary lower face seal 286 is disposed below the conduit chamber 216 in vertical alignment with the primary lower face seal 274 in a fourth annular groove 288 in the lower sealing portion 252 of the outer ring 248 for sealingly engaging a sealing surface 290 of the second lower sealing portion 228 of the inner ring 222. The secondary lower face seal 286 is in communication with the primary lower face seal 274 through the gap defined by the substantially outwardly facing surface 246 of the inner ring 222 and the substantially inwardly facing surface 266 of the outer ring 248.

If the primary upper seal 270 fails to retain pressure in the conduit chamber 216, the secondary upper seal 280 maintains the pressure which results in the thrust or axial loading of the inner and outer rings, as if the primary seal 270 were still in sealing engagement. This is achieved by the vertical alignment of the secondary seal 280 relative to the primary upper seal 270. Because the thrust loading has been maintained, the vertical distance between the surfaces 246 and 266 does not change, therefore providing another advantageous feature of the invention. Similarly upon a failure of the primary lower seal 274, the vertically aligned secondary lower seal 286 maintains the axial loading of the swivel S thereby maintaining the vertical distance between the surfaces 246 and 266.

A ball bearing assembly generally designated as 292, is disposed between the inner ring 222 and the outer ring 248 and having a plurality of identical bearing balls 294. As shown in Figures 3 and 4, the assembly 292 rotatingly supports the inner ring 222 axially and radially with respect to the outer ring 248. Figures 3 and 4 illustrate the plurality of bearing balls 294 in a toroidally shaped raceway chamber 296 preferably spaced from one another by means of spacers 298.

The bearing assembly 292 further comprises a first annular bearing race element 2100 secured to the inner ring 222 between the second lower sealing portion 228 and the bottom flange portion 230. The bearing race element 2100 has an outwardly facing concave bearing surface 296 and two outwardly facing annular contacts 2102 and 2106.

A second annular bearing race element 2108 is positioned adjacent the lower sealing position 252 of the outer ring 248. A third annular bearing race element 2114 is positioned below the second annular bearing race element 2108 and adjacent the lower sealing portion 252 of the outer ring 248. The second race element 2108 and the third race element 2114 may be formed of one integral race element similar to element 2100. The second element 2108 and the third element 2114 present an inwardly facing concave bearing surface 2110. The surface 2110 of element 2114 has an annular inwardly facing contact 2116 thereon and the surface 2110 of the second element 2108 has an annular inwardly facing contact 2112 thereon. The second element 2108 and the third element 2114 are secured below and adjacent lower sealing portion 252 by bolt 2118 threadedly received in a threaded bore in portion 252.

When the outer ring 248 and inner ring 222 are assembled together with the first element 2100, the second element 2108 and the third element 2114 assembled therebetween, the bearing surfaces 2110 and 296 form a toroidally shaped raceway chamber 297, as discussed above, having four contacts 2102, 2106, 2112 and 2116 thereon. The four point contact ball bearing assembly 292 aids in transfering the uni-directional axial loading created upon pressurization of the conduit chamber 216 in cooperation with the offset of the primary seal means 270 and 274 while tolerating radial forces and deflections. The radial deflections include deflections resulting from the pressurization of the conduit chamber 216.

The thrust or axial loading of the swivel S urges the rotatable outer ring 248 toward the stationary inner ring 222 for uni-directional loading on the bearing balls 294 to assure concentricity of the bearing balls 294 between the bearing race elements 2100, 2108, and 2114 and therefore, between the inner ring 222 and the outer ring 248. Additionally, the axial loading provides wear compensation of the bearing assembly means 292. The axial loading created by the offset of the seals is of such a magnitude that the force resisted by the bearing balls 294 is uni-directional, therefore producing more favorable loading for the bearing assembly 292. In other words, the rotatable outer ring 248, will exert a downward load on the elements 2108 and 2114 and in turn on balls 294. Such downward load is greater than expected external upward loads of the ring 248 with respect to outer ring 222. Element 2100 and inner ring 222 are stationary in the preferred embodiment. The bearing balls 294 provide an equal and opposite uni-directional force in reaction to the downward force or load of the rotatable outer ring 248. This upwardly directed force of the bearing balls is uni-directional in that it is in reaction to the sum of downward forces of ring 248 with respect to ring 222 due to pressurization and possible external upward forces on ring 248 with respect to ring 222.

A leak detection channel 2120 is provided extending laterally through the first upper sealing portion 256 of the outer ring 248 to an opening between the primary upper seal 270 and the secondary upper seal 280. Likewise, a leak detection channel 2122 is provided in the primary outer ring 250 and extends to an opening between the primary lower seal 274 and the secondary lower seal 286. A leak detection valve 2124 is connected to the leak detection channel 2120. Similarly, leak detection valve 2126 is connected to leak detection channel 2122. The leak detection channel 2120 in cooperation with leak detection valve 2124 provides a means to determine externally from the swivel S whether or not leakage is occurring past the primary upper seal 270. Likewise, leak detection channel 2122 in cooperation with leak detection valve 2126 provides a means to determine if pressurized fluid is leaking past primary lower seal 274. It is to be understood that in the preferred embodiment face or lip seals are used for seals 270, 274, 280 and 286 but that other types of seals may be used advantageously in this invention.

Each swivel section (except the lower most section as illustrated in Figure 2) further includes two downwardly facing annular grooves 2128 and 2130 in the bottom flange portion 254 of the outer ring 248. Flange 254 is secured to lower sealing portion 252 by means of bolt 264. Excluder seals 2132 and 2134 sealingly engage an upwardly facing surface 2136 of the swivel section adjacent below.

Excluder seals 2128 and 2134 prevent debris and dirt from entering the toroidally shaped bearing raceway chamber. Excluder seal 2128 also serves as a grease retainer maintaining lubrication within the ball bearing raceway chamber 296. Figure 1 also illustrates the lower most swivel section has an "L" shaped bottom flange portion 254' which has two excluder seals for sealingly engaging a downwardly facing surface of the bottom flange portion 230'. Closer ring 213 bolted to the topmost swivel section has two seals 255 for sealing the top outer rotatable ring with respect to the top inner stationary ring.

Figure 5 shows an alternative embodiment of a swival assembly S' from that of Figures 2 and 3, where an outer ring 248' is fixed to a stationary pedestal 242' while the inner ring 222' is rotatable. When the outer ring 248' is assembled with the inner ring 222' a toroidally shaped conduit chamber 216' is defined. A toroidal bearing raceway chamber 296', in which bearing balls 294' are disposed for axially and radially supporting the outer and inner rings with respect to one another. The chamber 295' is formed by elements 2108', 2100' and 2114'. In similar fashion to that illustrated in Figure 3, primary upper seal 270' sealingly engages stationary outer ring 248' rotatable inner with rotatable inner ring 222' and primary lower seal 274' sealingly engages the inner ring 222' with the outer ring 248' providing sealing of conduit chamber 216'.

Secondary upper seal 238' vertically aligned above and in communication with primary upper seal 270' and secondary lower seal 286' vertically aligned below and in communication with the primary lower seal 274' are positioned so that upon failure of the respective primary seal, the respective secondary seal will maintain the axial loading initially created by the radial offset of primary upper seal 270' with primary lower seal 274'.

In the alternative embodiment, inner ring 222' provides a thrust load upwardly to decrease the vertical distance between the sealing surfaces operably aiding in the sealing of the conduit 216'. Simultaneously, the upward movement of the inner ring 222' provides a uni-directional thrust load on the bearing assembly means 292' upon pressurization of the conduit chamber 216' to assure concentricity of the bearing balls 294' between the inner ring 222' and the outer ring 248' and to provide wear compensation for the bearing assembly means 292'. Outer ring 248' may be connected to outer rings stacked above and below it by means of threaded bores and bolts.

## Claims

1. A swivel adapted for rotating about a substantially vertical axis; including a swivel body having:

a) an inner ring (222) having a substantially outwardly facing surface (246);

b) an outer ring (248) having a substantially inwardly facing surface (266);

c) said surface when said inner ring (222) is in registration with said outer ring (248) forming a toroidally shaped conduit chamber (216);

d) one ring (222) being rotatably supported with respect to the other ring (248);

e) the inner ring (222) has on one side of the conduit chamber (216) an annular portion radially overlapping a first portion of the outer ring to form a sealing surface axially facing the conduit chamber (216), there being provided a corresponding sealing surface on the first portion of the outer ring (248);

f) the inner ring has on the other side of the conduit chamber (215) an annular portion radially overlapping a second portion of the outer ring to form a sealing surface axially facing away from the conduit chamber there being provided a corresponding sealing surface on the second portion of the outer ring;

g) a primary seal (270, 274) being disposed between each sealing surface of the inner ring and its respective corresponding sealing surface; characterized in that

h) the seal (270) between the sealing surface of the inner ring facing away from the conduit chamber (216) and its corresponding sealing surface of the outer ring (248) is at a greater distance from the vertical axis of the swivel than the seal (274) between the inner ring sealing surface facing towards the conduit chamber and its corresponding surface of the outer ring (248), pressurization of the conduit chamber, thereby causing an axial force between the inner ring and the outer ring in a direction urging each sealing surface towards its corresponsing sealing surface aiding the sealing of the conduit chamber, and

i) each primary seal (270, 274) is situated in an annular groove in one of the surfaces.

2. A swivel according to claim 1, characterized in that the inner ring (222) is stationary and said outer ring (248) is rotatable about said inner ring (222).

3. A swival according to claim 1 or 2 characterized in that the one ring is rotatably supported on the other ring by means of a ball bearing assembly positioned between the inner ring (222) and the outer ring (248), said ball bearing assembly including a plurality of bearings balls (294).

4. A swival according to claim 3 characterized in that the ball bearing assembly is a four point contact (2102, 2106, 2112, 2116) ball bearing assembly.

5. A swivel according to any preceding claim characterized in that there are provided secondary seals (280, 286) disposed in vertical alignment with the respective primary seals (270, 274) and acting between respective secondary sealing surfaces so that if said primary seals were to fail to retain pressure in the conduit chamber (216), said respective secondary seal means (280, 286) would, under the axial force between the inner and outer rings, retain the pressure.

6. A swivel according to claim 4 characterized in that the seal(s) (270, 280) that are at a greater distance from the vertical axis of the swivel are disposed in annular grooves (268, 276) in a stationary inner ring (222), and the other seal(s) (274, 286) are disposed in annular grooves (276, 288) in a rotatable outer ring (248).

## Patentansprüche

1. Drehgelenk mit einer im wesentlichen vertikalen Drehachse; mit einem Drehgelenkkörper, der

a) einen Innenring (222) mit einer im wesentlichen auswärtsgekehrten Fläche (246) und

b) einen Außenring (248) mit einer im wesentlichen einwärtsgekehrten Fläche (255) besitzt; wobei

c) bei mit dem Außenring (248) korrespondierendem Innenring (222) diese Flächen eine toroidförmige Leitungskammer (216) bilden;

d) der eine Ring (222) gegenüber dem anderen Ring (248) drehbar gelagert ist;

e) der Innenring (222) auf einer Seite der Leitungskammer (216) einen ringförmigen Teil besitzt, der einen ersten Teil des Außenringes unter Bildung einer der Leitungskammer (216) axial zugekehrten Dichtfläche radial überlappt, und auf dem Außenring eine entsprechende Dichtfläche vorgesehen ist;

f) der Innenring auf der anderen Seite der Leitungskammer (216) einen ringförmigen Teil besitzt, der einen zweiten Teil des Außenringes unter Bildung einer von der Leitungskammer axial angekehrten Dichtfläches radial überlappt, und auf dem zweiten Teil aus Außenringes eine entsprechende Dichtfläche vorgesehen ist; und

g) zwischen jeder Dichtfläche des Innenringes und der ihr entsprechenden Dichtfläche eine Primärdichtung (270, 274) angeordnet ist; dadurch gekennzeichnet, daß

h) die Dichtung (270) zwischen der von der Leitungskammer (216) abgekehrten Dichtfläche des Innenringes und der ihr entsprechenden Dichtfläche des Außenringes (248) von der vertikalen Drehachse des Drehgelenks weiter entfernt ist als die Dichtung (274) zwischen der der Leitungskammer zugekehrten Dichtfläche des Innenringes und der ihr entsprechenden Fläche des Außenringes (248), so daß eine Druckbeaufschlagung der Leitungskammer zwischen dem Innenring und dem Außenring eine Axialkraft in einer solchen Richtung zur Einwirkung bringt, daß zum Unterstützen des Abdichtens der Leitungskammer jede Dichtfläche zu der ihr entsprechenden Dichtfläche hin belastet ist, und

i) jede Primärdichtung (270, 274) in einer Ringnut in einer der Flächen angeordnet ist.

2. Drehgelenk nach Anspruch 1, dadurch gekennzeichnet, daß der Innenring (222) ortsfest und der Außenring (248) um den Innenring (222) drehbar ist.

3. Drehgelenk nach Anspruch 1 oder 2, dadurch gekennzeichnet, daß der eine Ring auf dem anderen mittels eines Kugellagers drehbar gelagert ist, das zwischen dem Innenring (222) und dem Außenring (248) angeordnet ist und eine Merzahl von Lagerkugeln (294) besitzt.

4. Drehgelenk nach Anspruch 3, dadurch gekennzeichnet, daß das Kugellager ein Kugellager mit vier Berührungspunkten (2102, 2106, 2112, 2116) ist.

5. Drehgelenk nach einem der vorhergehenden Ansprüche dadurch gekennzeichnet, daß Sekundärdichtungen (280, 286) vorgesehen sind, die mit je einer Primärdichtung (270, 274) vertikal fluchten und zwischen je zwei Sekundärdichtflächen derart wirken, daß im Falle die Primärdichtungen den Druck in der Leitungskammer (215) nicht halten die entsprechenden Sekundärdichtungen (280, 286) infolge der zwischen dem Innen- und dem Außenring wirkenden Axialkraft den Druck halten.

6. Drehgelenk nach Anspruch 4, dadurch gekennzeichnet, daß die von der vertikalen Achse des Drehgelenks weiter entfernten Dichtung(en) (270, 280) in Ringnuten (268, 276) in einem ortsfesten Innenring (222) angeordnet ist bzw., sind und daß die andere(n) Dichtung(en) (274, 286) in Ringnuten (276, 288) in einem drehbaren Außenring (248) angeordnet ist bzw. sind.

**Revendications**

1. Raccord articulé conçu pour tourner autour d'un axe substantiellement vertical, comprenant un corps de raccord articulé ayant

a) un anneau intérieur (222) ayant une surface (246) tournée substantiellement vers l'extérieur;

b) un anneau extérieur (248) ayant une surface (266) tournée substantiellement vers l'intérieur;

c) lesdites surfaces formant un conduit (216) de forme toroïdale quand ledit anneau intérieur (222) est un concordance avec ledit anneau extérieur (248);

d) un anneau (222) étant disposé de façon à pourvoir tourner par rapport à l'autre anneau (248);

e) l'anneau intérieur (222) a d'un côté du conduit (216) une partie annulaire recouvrant radialement une première partie de l'anneau extérieur pour former une surface d'étanchéité tournée axialement vers l'intérieur du conduit (216), une surface d'étanchéité correspondante étant prévue sur la première partie de l'anneau extérieur (248);

f) l'anneau intérieur a de l'autre côté du conduit (216) une partie annulaire recouvrant radialement une seconde partie de l'anneau extérieur pour former une surface d'étanchéité tournée axialement vers l'extérieur du conduit, une surface d'étanchéité correspondante étant prévue sur la seconde partie de l'anneau extérieur;

g) un joint primaire (270, 274) étant diposé entre chaque surface d'étanchéité de l'anneau intérieur et sa surface d'étanchéité correspondante respective; caractérisé en ce que

h) le joint (270) entre la surface d'étanchéité de l'anneau intérieur tournée vers l'extérieur du conduit (216) et sa suface d'étanchéité correspondante sur l'anneau extérieur (248) se trouve à une distance plus grande de l'axe vertical du raccord articulé que le joint (274) entre la surface d'étanchéité de l'anneau intérieur tournée vers le conduit et sa surface d'étanchéité correspondante sur l'anneau (248), la mise sous pression du conduit causant ainsi une force axiale entre l'anneau intérieur et l'anneau extérieur dans une direction forcant chaque surface d'étanchéité vers sa surface s'étanchéité correspondante soutenant ainsi l'étanchéité du conduit, et

i) chaque joint primaire (270, 274) est situé dans une rainure annulaire dans une des surfaces.

2. Raccord articulé selon la revendication 1, caractérisé en ce que l'anneau intérieur (222) est stationnaire et l'autre anneau (248) peut être tourné autour dudit anneau intérieur (222).

3. Raccord articulé selon la revendication 1 ou 2, caractérisé en ce qu'un anneau est disposé de façon à pourvoir tourner sur l'autre anneau au moyen d'un roulement à billes placé entre l'anneau intérieur (222) et l'anneau extérieur (248), ledit roulement à billes comprenent une pluralité de billes (294).

4. Raccord articulé selon la revendication 3, caractérisé en ce que le roulement à billes est un roulement à billes à quatre points de contact (2102, 2106, 2112, 2114).

5. Raccord articulé selon l'une quelconque des revendications précédentes, caractérisé en ce que des joints secondaires (280, 286) sont prévus disposés en alignement vertical avec les joints primaires (270, 274) respectifs et agissant entre des surfaces d'étanchéité secondaires respectives se sorte que, si lesdits joints primaires manqueraient de retenir la pression dans le conduit (216), lesdits joints secondaires (280, 286) respectifs retiendraient la pression à cause de la force axiale entre les anneaux intérieur et extérieur.

6. Raccord articulé selon la revendication 4, caractérisé en ce que les joints (270, 280) qui se trouvent à une plus grande distance de l'axe vertical du raccord articulé sont disposés dans des rainures annulaires (268, 276) dans un anneau intérieur stationnaire (222), et que les autres joints (274, 286) sont disposés dans des rainures annulaires (276, 288) dans un anneau extérieur rotatif (248).

*fig.1*

*fig.5*

fig.2

fig.4

fig.3